# EUROPEAN PATENT SPECIFICATION

(11) **EP 0 704 517 B1**
(45) Date of publication and mention of the grant of the patent: **08.12.1999**
(21) Application number: 95306407.8
(22) Date of filing: 13.09.1995
(51) Int. Cl.: C10G 11/18, C10G 70/04

(54) **Hydrocarbon catalytic cracking process**
Katalytisches Kohlenwasserstoffkrackverfahren
Procédé de craquage catalytique d'hydrocarbures

(30) Priority: 30.09.1994 US 315633; 30.09.1994 US 315634
(43) Date of publication of application: 03.04.1996
(73) Proprietor: THE BOC GROUP, INC., Murray Hill, New Jersey 07974 (US)
(72) Inventor: Menon, Raghu K., Medford, New Jersey 08055 (US); Ramachandran, Ramakrishnan, Allendale, New Jersey 07401 (US)
(74) Representative: Wickham, Michael

(56) References cited:
- EP-A- 0 512 170
- EP-A- 0 655 492
- US-A- 5 245 099
- VENUTO P B, HABIB T E: "FLUID CATALYTIC CRACKING WITH ZEOLITE CATALYSTS" 1979 , MARCEL DEKKER , NEW YORK XP002000665 5382 * page 14; figure 8 *

## Description

This invention relates to a process of fluid catalytic cracking of hydrocarbons able to increase the throughput of hydrocarbon feed.

Refinery cracking processes serve to upgrade the heavier portions of petroleum to large volumes of lighter, more valuable hydrocarbon products. The cracking process is performed catalytically or thermally, the particular method depending on the type of petroleum feedstock being processed. The older thermal cracking processes, which use delayed cokers and flexicokers, treat heavy petroleum fractions, while the newer catalytic cracking process, which has developed into one of the most important petroleum refining processes, is used to crack lighter petroleum fractions, such as vacuum gas oil. The dominant catalytic cracking process in use today is the fluid catalytic cracking (FCC) process.

In FCC processes a mixture of hydrocarbon feedstock and steam is injected into a section of a hydrocarbon reactor unit referred to as the riser, where it contacts hot regenerated catalyst. Operating temperatures in the riser-reactor are typically in the range of about 450 to about 575°C. Cracking reactions begin immediately, producing an array of lower boiling hydrocarbons. The catalyst and cracked hydrocarbon vapours are carried up the riser into the catalyst-vapour disengagement section. Hydrocarbon condensation reactions also occur in the riser, with the result that coke is produced and deposited on the active sites of the catalyst. This substantially reduces the catalyst activity and selectivity.

The cracked hydrocarbon vapours and coked catalyst are separated in the reactor disengagement section. The separated catalyst drops by gravity into the stripping section of the unit, where hydrocarbons entrained with the catalyst are separated therefrom by means of stripping steam. The catalyst-free hydrocarbon vapours leave the reactor unit through the cracked product transfer line, and are conveyed to the main column for fractionation.

The cracked hydrocarbons enter the main column, where they are separated into one or more liquid streams and an overhead vapour stream. The overhead vapour stream, which consists of light gasoline and C₄ and lighter hydrocarbons, hydrogen and perhaps light inert gases, such as nitrogen, is cooled and discharged into the overhead accumulator vessel, where it undergoes flash separation to yield two hydrocarbon streams: a vapour stream, comprising substantially C₄ and lighter hydrocarbons and hydrogen, and a liquid stream comprising C₅ and heavier hydrocarbons, typically called unstabilized gasoline.

The overhead accumulator vapour stream, typically referred to as wet gas, is subsequently compressed for downstream fractionation steps. The compression is usually conducted in a train of compressors comprising two stages of compression, with interstage condensation and removal of additional unstabilized gasoline. The compressed stream is sent to a high pressure receiver vessel, from which a gaseous stream and a liquid stream are separated. The gaseous stream, referred to as high pressure gas and comprising mostly C₂ ⁻ hydrocarbons and hydrogen, is sent to a series of absorbers and distillation columns for recovery of the various components of this stream. The liquid stream from the high pressure receiver is likewise subjected to downstream processing steps for recovery of its components.

The stripped catalyst from the disengagement section of the cracking reactor flows into the catalyst regenerator. A controlled amount of air is blown into this vessel to rejuvenate the catalyst by combusting the coke on the catalyst, which is maintained in a fluidized state in the regenerator. The coke combustion reactions are highly exothermic; accordingly the catalyst becomes very hot, e.g. its temperature after regeneration is generally in the range of about 560 to about 800°C. Regenerated catalyst is carried out of the regenerator through the regenerated catalyst standpipe and is introduced into the reactor riser, thereby completing the catalyst cycle.

The rate of catalyst flow to the riser is typically controlled by a slide-valve in the regenerated catalyst standpipe. Steady flow of catalyst through this valve is maintained by maintaining a steady residual pressure drop across the valve. For this purpose, it is essential that the regenerator pressure be maintained at a pressure higher than the reactor vessel pressure. Thus, the minimum pressure in the catalyst regenerator can be determined by the pressure in the cracking reactor.

The demand for refined hydrocarbon products has increased the incentive to maximise the amount of throughput or conversion in refinery FCC systems. Operation at higher FCC throughput or conversion increases wet-gas production, which in turn, increases production of valuable light hydrocarbons. The ability to increase FCC hydrocarbon throughput or conversion is very often limited by one or more of: (i) wet-gas compression capacity, (ii) regenerator coke burning capacity, and (iii) the ability to circulate catalyst by maintenance of required pressure drop across critical elements of the system.

Wet-gas compressor throughput can be enhanced by operating with a higher compressor inlet suction pressure, which can be attained by increasing the overhead accumulator pressure. For instance, increasing the overhead accumulator pressure by 1 psi can increase wet-gas compressor capacity by up to about 4%. However, the pressure in the overhead accumulator controls the upstream pressure, i.e. the pressure in the main column and the hydrocarbon riser-reactor. Increasing the overhead accumulator pressure would cause an increase in riser-reactor pressure, which is undesirable from a cracking perspective, because higher cracking reaction pressures enhance the selectivity of the coke-forming condensation reaction at the expense of the desirable cracking reactions. Furthermore, the riser-reactor can encounter a catalyst circulation limit and flow reversal, unless the catalyst regenerator pressure is also correspondingly increased. Increasing the regenerator pressure is undesirable because this increases the air blower discharge pressure, which reduces its output.

Wet-gas compressor throughput can also be increased by lowering the compressor discharge pressure. This is likewise undesirable because the corresponding lower deethanizer-absorber pressure causes propylene to be lost to fuel gas. Quantitatively, lowering the absorber pressure by 20 psi could increase gas compressor throughput by 5%, but it also results in a 1.5% reduction in propylene recovery.

In addition to increasing wet-gas production, operation at higher throughput or conversion increases coke production rate, which tends to push units to their limiting ability to regenerate spent catalyst. The actual limit can be due to the limiting amount of air which the air blower can discharge. Some relief from an air-blower limit may be obtained by lowering the regenerator pressure, which enables the blower to discharge more moles of oxygen (in the form of air or oxygen plus inert diluent). The increased amount of oxygen availability allows the combustion of a larger amount of coke, which also releases more heat energy in the regenerator. The increased heat release and coke burning capacity can be taken advantage of by increasing the feed rate to the riser-reactor, and allowing the unit to establish a different heat and coke balance. However, lowering the regenerator pressure at constant riser pressure, could also lead to a catalyst circulation limit and flow reversal. A catalyst circulation limit may also be directly encountered due to the higher catalyst circulation rate required to process higher throughput at constant conversion. From the above discussion, it is clear that the major constraints on an FCC unit are all strongly interrelated, and operational moves made to obtain relief from any one constraint may push the unit towards another constraint. Nonetheless, the hydrocarbon throughput and conversion in the cracking reactor are limited by the capacity of the wet-gas compression system. One aim of the present invention is to provide a process which combats this problem.

According to the present invention there is provided a process for producing and recovering cracked hydrocarbons from a hydrocarbon feedstock comprising:
(a) cracking said hydrocarbon feedstock in the hydrocarbon cracking zone of a fluid catalytic cracking system comprising a hydrocarbon cracking zone and a catalyst regeneration zone in the presence of hot regenerated hydrocarbon cracking catalyst, and removing a cracked hydrocarbon product stream and coke-coated catalyst from said cracking zone;
(b) transporting coke-coated catalyst from said cracking zone to said catalyst regeneration zone, regenerating catalyst therein by burning coke from the catalyst in the presence of an oxygen-inert gas mixture, and returning regenerated catalyst to said hydrocarbon cracking zone;
(c) distilling said cracked hydrocarbon product in a cracked hydrocarbon product separation zone, thereby producing an overhead gas stream and one or more liquid streams;
(d) cooling said overhead gas stream, thereby separating said gas stream into a liquid stream containing C₅ and heavier hydrocarbons and a wet gas stream comprising of C₄ and lighter hydrocarbons and hydrogen;
(e) subjecting at least part of said wet gas stream to separation by pressure swing adsorption in an adsorption zone containing an adsorbent which preferentially adsorbs C₂ and higher hydrocarbons from said wet gas, thereby producing a non-adsorbed gas fraction comprising methane and hydrogen and an adsorbed gas fraction comprising hydrocarbons higher than methane and an adsorbed fraction comprised of C₂ and higher hydrocarbons;
(f) desorbing said adsorbed gas fraction from said adsorption zone;
(g) compressing the desorbed gas fraction in at least one wet gas compressor; and
(h) transporting compressed desorbed gas fraction to downstream hydrocarbon processing units.

The process according to the invention effectively reduces the load on the waste gas compressor. This makes possible a reduction in the feed pressure (i.e. the overhead accumulator pressure) to the waste gas compressor. As a result an increase in hydrocarbon throughput and conversion in the cracking reactor that can be obtained.

Hydrocarbon cracking catalyst regeneration is preferably initiated prior to the start of the process according to the invention by:
1) combusting fuel with air in the catalyst regeneration zone containing the hydrocarbon cracking catalyst, thereby heating said catalyst and producing exhaust gas comprising carbon dioxide and nitrogen;
2) subjecting said exhaust gas to pressure swing adsorption in an adsorption zone containing a bed of adsorbent which more strongly adsorbs carbon dioxide than nitrogen and which more strongly adsorbs C₂ and higher hydrocarbons than methane and hydrogen, thereby producing carbon dioxide-enriched gas;
3) at least partially replacing said air with oxygen and said carbon dioxide-enriched gas; and
4) when air replacement to the desired extent is attained, stopping the flow of exhaust gas to the adsorption zone and recycling exhaust gas directly to said regenerator zone.

In comparison with air, the mixture of oxygen and carbon dioxide-enriched gas facilitates catalyst regeneration without of necessity creating higher regeneration temperatures. Employing pressure swing adsorption, as described above, in the initiation of catalyst regeneration avoids the need for a separate supply of carbon dioxide at start-up. Throughout the initiation of cracking catalyst regeneration, preferably no separation of the wet gas by pressure swing adsorption is performed. Consequently, the same apparatus that is subsequently employed to separate the wet gas by pressure swing adsorption may be used to separate the exhaust gas. Thus, the effective cost of the initiation procedure may be kept to a minimum.

As cracking catalyst regeneration proceeds, hot regenerated catalyst is transported to the hydrocarbon cracking reactor. As the catalyst enters the riser section of the reactor, it contacts hydrocarbon feed that is also being introduced into the reactor through the reactor riser. The hydrocarbon undergoes cracking upon contact with the hot catalyst, thereby producing a gaseous hydrocarbon stream comprising one or more hydrocarbons lower in molecular weight than said hydrocarbon feed and depositing coke on said catalyst. The coked catalyst is recycled to the regenerator for regeneration, and the cracked hydrocarbon stream is sent to the main column, where it is distilled into overhead gas stream and one or more liquid streams. The overhead gas stream is cooled and separated into a C₅ and higher hydrocarbon-containing liquid stream and a wet gas stream comprised of C₄ and lighter hydrocarbons and hydrogen.

The fuel used during initiation can be the coke deposits on the catalyst, or it can be a hydrocarbonaceous fluid, i. e. a liquid or gaseous hydrocarbon, such as fuel oil or natural gas. In a preferred embodiment, the fuel is fuel oil.

The process according to the invention can begin at any time after termination of passage of catalyst regenerator exhaust gas through the PSA plant.

The catalyst may be fresh or regenerated catalyst or it may be equilibrium catalyst, i.e. catalyst from the current or a previous run.

The cracking catalyst regeneration step (b) can be carried out under conditions that will produce an exhaust gas comprising essentially carbon dioxide, i.e. it can be carried out in the presence of excess oxygen; or it may be carried out under conditions that result in the production of significant quantities of carbon monoxide.

The adsorptive separation step (e) can be carried out with all or part of the wet gas stream being subjected to the pressure swing adsorption step. In the preferred embodiment all of the wet gas is subjected to pressure swing adsorption. Also part or all of the wet gas can be taken from a point intermediate the first and second compression stages of a two stage wet-gas compression step.

The volume of wet gas that is handled by the wet gas compressors is reduced by diverting all or a portion of the compressor feed gas to an adsorption system comprising one or more adsorption beds containing adsorbent(s) that adsorb C₂ and higher hydrocarbons more strongly than they adsorb methane and hydrogen. Methane and hydrogen, and any other light inert gases that are present in the wet gas, such as nitrogen and argon, pass through the adsorption beds as non-adsorbed component, and are sent to refinery fuel, or otherwise disposed of. The adsorbed gas component, enriched in hydrocarbons heavier than methane, i.e. having molecular weights greater than that of methane, is desorbed from the adsorbent and sent to the wet gas compressors, where it is compressed and sent to downstream hydrocarbon separation units.

The overhead stream gas stream is preferably discharged into an overhead accumulator where it separates into a liquid phase and a vapour phase. The liquid phase, comprising unstable gasoline, may be removed. The vapour phase is the wet gas stream.

In a first embodiment of the process according to the invention, the entire wet gas stream is sent to an adsorption system for removal of methane and hydrogen. The adsorption system may include a first, i.e. preliminary, adsorption bed which adsorbs C₅ and heavier hydrocarbons from the wet gas stream and a second, i.e. main, adsorption bed which adsorbs C₂ and higher hydrocarbons from the wet gas. As the wet gas stream passes through the preliminary bed C₅ and higher hydrocarbons are removed from the stream. The non-adsorbed gas from the preliminary adsorption bed then passes through the main adsorption bed wherein C₂ and heavier hydrocarbons are adsorbed. Methane and hydrogen pass through the adsorption system as non-adsorbed gas and sent to refinery gas, or otherwise disposed of. The C₅ and heavier adsorbed components are desorbed from the preliminary bed and combined with other unstable gasoline streams from the plant. The methane- and hydrogen-depleted wet gas is desorbed from the main bed and sent to the wet gas compressors. and the compressed gas is transported to downstream hydrocarbon processing units for further separation of its components.

In a second embodiment of the process according to the invention, part of the wet gas stream from the overhead accumulator is sent to the above-described adsorption system and the remainder, or bypass wet gas stream, is sent to the compressors. After separation of the light components, the desorbed component stream is combined with the bypass wet gas stream, and the mixture is sent to the compressors.

In a third embodiment of the process according to the invention, all of the wet gas stream is sent to the first stage compressor and then to a receiver, wherein additional unstable gasoline is removed. Part of the remaining wet gas stream can be further compressed and is sent to further downstream processing units, and the remainder is sent to the above-described adsorption system for removal of light components. The desorbed component is recycled to the feed to the first compressor.

In a fourth embodiment of the process according to the invention, part of the wet gas stream is compressed in a first stage wet gas compressor and additional liquid C₅ hydrocarbon-containing component is removed therefrom. Part of the compressed and further C₅ hydrocarbon-depleted wet gas stream can be further compressed and is sent to downstream processing units, and the remainder is combined with wet gas stream that was not subjected to wet gas compression and further liquid C₅ hydrocarbon removal, and the combined stream is subjected to the above-described adsorption process. The desorbed stream, containing hydrocarbons higher than methane, is recycled to the first wet gas compressor.

Preferably, the compression of the desorbed gas fraction is carried out in two stages. The wet gas used as feed for the adsorption step is taken from a point intermediate the first and second compression stages.

Preferably, the adsorption step of the pressure swing adsorption process is carried out at an absolute pressure in the range of about 2 to about 5 bar, and the adsorbent regeneration step of the pressure swing adsorption process is carried out at an absolute pressure in the range of about 200 to about 2000 torr.

Preferably, the adsorbent used in the preliminary adsorption step is a medium or large pore zeolite, such as dealuminated type Y zeolite, and that used in the main adsorption step is selected from silica gel, activated carbon, activated alumina, zeolite molecular sieves and mixtures of these.

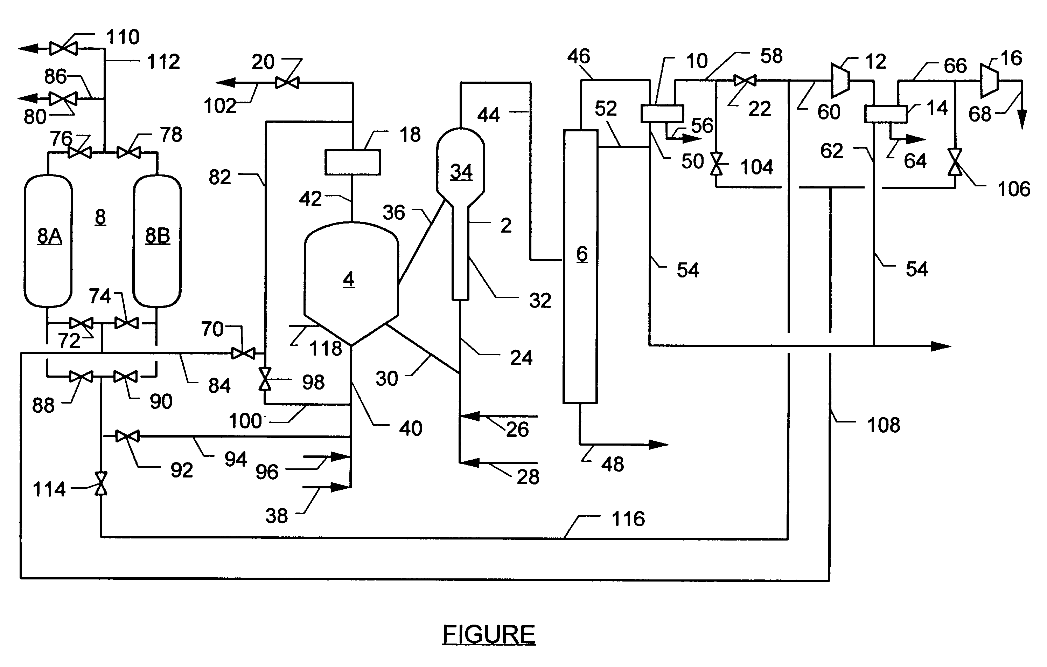

The process according to the present invention will now be described by way of example with reference to the accompanying drawing which is a schematic illustration of a hydrocarbon FCC plant comprising a hydrocarbon cracking reactor, a cracking catalyst regenerator, and a part of cracked catalyst recovery system.

The present invention can be used with advantage in any hydrocarbon cracking process in which a hydrocarbon is cracked in a reactor by means of a fluidized particulate catalyst, thereby depositing a coating of coke on the catalyst, and the catalyst is subsequently transferred in the fluidized state to a regenerator for removal of the coke deposits by combustion with air. Included in such processes are conventional FCC operations, fluid coking and flexicoking processes which use coke particles as the catalyst. For the sake of simplicity, however, the invention will be described in detail as it applies to an FCC process.

The drawing illustrates a typical FCC system equipped to handle each of the above-discussed embodiments of the invention. The system illustrated in the Figure includes, as principal units, an FCC riser type reactor 2, a cracking catalyst regenerator 4, a main hydrocarbon fractionator 6, an adsorption plant 8, a main fractionator overhead accumulator 10, a first stage compressor 12, an interstage gas receiver 14, a second stage compressor 16, and a carbon monoxide reactor 18. All of the above-mentioned equipment units are conventional and details of their design, construction and operation are well known. Various pipelines and valves have been included in the drawing as an aid to the explanation of the several aspects of the invention. Hydrocarbon processing and separation equipment and associated processing equipment, such as valves, heat exchangers and gauges, that are incidental to the invention or which are not necessary for an understanding of the invention have been omitted from the drawing for the sake of simplicity.

In the conventional operation of the system illustrated in the drawing, valves 20 and 22 are open and all other valves are closed. A hydrocarbon feed stream, such as vacuum gas oil, and steam are introduced into reactor feed line 24 via lines 26 and 28, respectively. As the mixture passes upwardly in line 24 it mixes with hot regenerated cracking catalyst, which enters line 24 through regenerated catalyst transport line 30. The catalyst is fluidized by the rising hydrocarbon and steam vapours and the fluidized mixture enters the bottom of the riser section 32 of reactor 2. The hydrocarbon rapidly cracks into lighter hydrocarbons as it moves upwardly through riser 32. During the course of the cracking reaction the catalyst becomes coated with coke, as a result of hydrocarbon condensation reactions that accompany cracking of the hydrocarbon. The cracked hydrocarbon-catalyst mixture enters disengagement section 34 of reactor 2, and enters a battery of cyclone separators (not shown) where catalyst is separated from the gas mixture. Subsequently, residual hydrocarbon entrained with the catalyst is removed by steam stripping. Spent catalyst passes out of reactor 2 through spent catalyst transport line 36 and flows to regenerator 4.

Upon entering regenerator 4, the hot coked catalyst contacts a stream of air introduced into regenerator 4 through line 38 and feed line 40. The coke deposits rapidly ignite and burn. Combustion of the coke can be conducted in the presence of excess oxygen, which results in the conversion of the coke to carbon dioxide, or it can be conducted in the presence of a stoichiometric deficit of oxygen, which results in the production of carbon monoxide and carbon dioxide. Regenerated catalyst flows through regenerated catalyst transport line 30 to reactor feed line 24 to complete the catalyst cycle. The hot exhaust gases rise to the top of regenerator 4 and pass out of the regenerator through exhaust gas line 42. If the regenerator is operated under conditions that result in the production of carbon monoxide, the carbon monoxide can be oxidised to carbon dioxide in reactor 18. The exhaust gas, which is very hot, is also generally passed through waste heat recovery units (not shown) upstream of being disposed of. In the illustrated system the exhaust gas leaves the regenerator system through valve 20.

The cracked hydrocarbon gas passes out of reactor 2 through product line 44 and is transported to main fractionator 6 in the form of a column. As the hydrocarbon reactor effluent passes through fractionator 6, the more volatile components separate from the less volatile components, the lighter (lower-boiling) components rising towards the top of the column, and the heavier components descending towards the bottom of the column. At the top of the column a vapour stream comprising primarily C₅ and lighter components is removed from the column 6 through overhead vapour line 46, and at the bottom of the column a heavy hydrocarbon stream is removed from the column through line 48. The bottom product can be recycled as feed to reactor 2, or it may be sent to downstream units for further processing. Several intermediate side-streams are also typically withdrawn from column 6, but these have no bearing on the invention, and thus are not shown in the drawing.

The overhead stream from column 6 is cooled and passed into overhead accumulator 10, where liquid and vapour components separate. Unstable gasoline is removed from the bottom of accumulator as a liquid through line 50. A portion of this stream is recycled to column 6 as reflux through reflux line 52, and the remainder is sent to downstream processing units (not shown) via line 54 for further product recovery. A liquid sour water stream is removed from accumulator 10 through drain line 56.

A wet-gas stream comprising generally C₄ and lighter components, but still containing small quantities of C₅ and heavier components, leaves accumulator 10 through line 58, passes through valve 22 and compressor feed line 60 and enters first stage wet-gas compressor 12. The wet-gas compressors are illustrated as a pair of serially connected units, but can be configured in other arrangements, such as parallel-series combinations. As the wet-gas undergoes compression, additional gasoline component and sour water are condensed. The first stage compressor liquid-gas effluent is sent to interstage receiver 14, from which gasoline and sour water are removed through lines 62 and 64, respectively. The interstage gasoline condensate is combined with the gasoline in line 54 and likewise sent to downstream processing units (not shown) for further product separation. An intermediate pressure gas stream exits receiver 14 through line 66 and is subjected to further compression in second stage compressor 16. This high pressure gas stream exiting compressor 16, now comprising C₄ and lighter components, is sent to downstream units via line 68 for further separation of the various alkene and alkane components contained in this stream.

A procedure for initiating catalyst regeneration will now be discussed as it applies to the illustrated plant operating in a conventional manner as described above. Thus, regenerator 4 is initially operated using air as the oxidant, and the exhaust gas is initially being discharged from the system through line 42 and valve 20. The air is then replaced by substantially pure oxygen and carbon dioxide. The carbon dioxide is provided by passing the exhaust gas from regenerator 4 through adsorption plant 8 to remove nitrogen and other weakly adsorbed gas components from the exhaust gas and taking the sorbate, which is enriched in carbon dioxide is used as the source of carbon dioxide.

Adsorption plant 8 may comprise a single adsorber or a battery of adsorbers arranged in parallel and/or in series. In preferred embodiments, the system comprises two or more adsorbers arranged in parallel and cycled out of phase to provide a pseudo continuous flow of non-adsorbed and desorbed gas streams. In the drawing, adsorption plant 8 is shown as comprising two adsorption vessels, 8A and 8B, which are arranged in parallel and designed to be operated in alternate adsorption-desorption service.

The adsorption plant is operated in a pressure swing adsorption (PSA) mode. Pressure swing adsorption is well known for separating the components of a mixture of gases by virtue of the difference in the degree of adsorption among them on a particulate adsorbent retained in a stationary bed. Typically, two or more such beds are operated in a cyclic process comprising adsorption under relatively high pressure and desorption or bed regeneration under relatively low pressure or vacuum. The cycle may contain steps other than the fundamental steps of adsorption and regeneration. For example, the cycle may include one or more bed pressure equalisation steps, in which some of the gas contained in a first adsorption vessel which has just completed its adsorption step is transferred to a second adsorption vessel which has just completed its bed regeneration step. In this way the high pressure gas in the first vessel is used to partially pressurise the second bed, thus enhancing the efficiency of the process. The cycle may also include a product backfill step wherein the regenerated bed is partially pressurised, before or in lieu of the bed equalisation step, by introducing non-adsorbed product gas into the bed in the countercurrent direction, i.e. in the direction opposite to the direction that fresh feed in passed through the bed. The design and operation of such PSA plants are well known.

The adsorption can be carried out using any adsorbent or mixture of adsorbents that selectively adsorb carbon dioxide from mixtures of carbon dioxide and nitrogen and that selectively adsorb C₂ and higher hydrocarbons from a gas mixture containing these hydrocarbons, methane, and hydrogen, and possibly also containing light permanent gases, such as nitrogen and argon. Suitable adsorbents include molecular sieves, activated carbons, activated clays, silica gels, activated aluminas. Molecular sieves include aluminophosphates, silicoaluminophosphates, and zeolites. Typical zeolites include natural zeolites, such as chabazite, clinoptilolite, erionite, faujasite and mordenite and synthetic zeolites, such as type X zeolites, type A zeolites, and type Y zeolites. Preferred adsorbents include silica gel, activated carbon, activated alumina, zeolite molecular sieves and mixtures of these.

When the adsorbent is a molecular sieve, it is often desirable to combine it with a binder. Any natural or synthetic binder material or mixture of materials can be used as binder for the adsorbent. Typical binders include metal oxides, clays, silicas and aluminas. Suitable clay binders include kaolin, bentonite, montmorillonite and attapulgite. The choice of binder and methods of agglomerating the adsorbent and binder are well known to those skilled in the art. The adsorption process is generally carried out at temperatures in the range of about 0 to about 200°C, and preferably at temperatures in the range of about 15 to about 150°C. The adsorption step of the cycle is usually carried out at absolute pressures in the range of about 1 to about 10 bar, and is preferably carried out at absolute pressures in the range of about 2 to about 5 bar.

The adsorbent regeneration step of the cycle is generally carried out at an absolute pressure of about 200 to about 3000 torr, and is preferably carried out at an absolute pressure in the range of about 200 to about 2000 torr. The adsorbent can be regenerated by a number of techniques. In one procedure, the adsorbent is regenerated by venting the bed back to the compressor feed line until the pressure in the bed reaches about atmospheric pressure. If desired the adsorbent can be further regenerated by evacuation using a vacuum means, such as a vacuum pump or an ejector. By this means the pressure in the bed can be reduced to 200 mm absolute, or lower. The adsorbent can also be purged with a gas, such as the non-adsorbed fraction. Combinations of venting, vacuum evacuation and purging can also be used for adsorbent regeneration. If it is desired to maximise the amount of hydrocarbon recovered in each cycle, all three of these recovery procedures can be used.

Air replacement can be initiated with either adsorber 8A or adsorber 8B in adsorber service. In the following discussion, initial operation of adsorption plant 8 will be described with adsorption unit 8A in adsorption service. During this phase valve 22, will remain open, valves 70, 72, 76 and 86 will be opened, and all other valves will be in the closed position.

The exhaust gas leaves regenerator 4 through line 42, is conducted through line 82, valve 70, line 84, valve 72 and into adsorber 8A. Upstream of its being introduced into the adsorber the exhaust gas is pressurised to a pressure generally in the range of about 2 to about 20 atmospheres. Carbon dioxide is adsorbed from the gas as it moves through the bed of adsorbent in adsorber 8A, while nitrogen and any oxygen present pass through the adsorbent and leave the adsorption plant through valves 76 and 86 and line 112. As the adsorption proceeds, the carbon dioxide adsorption front progresses through vessel 8A toward the non-adsorbed gas outlet end. When the adsorbed gas front reaches the desired point in adsorber 8A, the adsorption step is terminated and the adsorption cycle moves into its second phase, in which vessel 8B is put into adsorption service and vessel 8A undergoes regeneration.

In this phase of the operation valves 22 and 70 remain open, valves 74, 78, 80, 88 and 92 are opened and all other valves are closed. Exhaust gas now enters vessel 8B wherein carbon dioxide is adsorbed from the gas and nitrogen passes to vent through valve 78 and line 86, as described above. Meanwhile, vessel 8A is depressurized by flow of gas out through valve 88. The desorbed gas, now rich in carbon dioxide, passes through valve 92 and line 94 and enters regenerator 4 through feed line 40. If desired, depressurization of vessel 8A may be assisted by means of a vacuum pump (not shown). When vessel 8A is depleted of carbon dioxide to the desired extent, and when the carbon dioxide adsorption front in vessel 8B reaches the desired point, the second phase of the adsorption process is completed and the cycle is repeated with vessel 8A in adsorption service and vessel 8B undergoing regeneration.

As the air replacement procedure progresses, the concentration of carbon dioxide in regenerator 4 begins to build up. To maintain the oxygen to inert diluent ratio and the total amount of oxygen entering regenerator 4 at the desired levels, it is necessary to begin introducing oxygen into regenerator 4 through line 96 and to reduce the flow of air into this unit through line 38. The air replacement procedure is continued until the desired air to added oxygen and carbon dioxide ratio is attained, or until all of the air feed is replaced with oxygen and recycle carbon dioxide, whichever procedure is preferred. If complete air replacement is preferred all air flow through line 38 is terminated.

Upon completion of the air replacement step, use of adsorption plant 8 for removal of nitrogen from the exhaust gas is no longer necessary. At this point valves 70 and 92 are closed and valve 98 in bypass line 100 is opened. Flow of exhaust gas is now directly recycled to regenerator 4. Additionally in this embodiment, to prevent excessive build-up of carbon dioxide in regenerator 2, valve 20 is opened sufficiently to maintain the carbon dioxide level in the system at the desired level. Excess carbon dioxide then passes out of the system through valve 20 in line 102. Opening valve 20 serves the additional purpose of preventing the build-up of nitrogen and gaseous impurities, such as argon, sulphur oxides and nitrogen oxides, in the system. The gas stream leaving the system through valve 20 may be vented to the atmosphere or, if it contains gaseous components that are harmful to the environment, it may be sent to downstream purification units for removal of the harmful components.

The process according to the invention can now be initiated at any time. In the process according to the invention, regenerator 4 is operated with recycle of exhaust gas through line 82. Accordingly, valves 20 and 98 remain open and valves 70 and 92 remain closed.

The process according to the invention has several different variants. Four of these variants, referred to below as the first, second and third, and fourth embodiments are described below.

The first embodiment will be described with adsorber 8A initially in adsorption service. In this mode, valves 72, 76, 104 and 110 are initially open and valves 22, 74, 78, 80, 88, 90, 106, 114 and 116 are initially closed. Wet-gas is now diverted to adsorption plant 8 through valve 104 and line 108. The wet-gas approaching adsorption plant 8 may contain a considerable amount of moisture. Since moisture is usually rapidly adsorbed by most adsorbents, it is preferable to dry the gas upstream of admitting it to the adsorption beds. This drying can be accomplished by passing the gas through a desiccant, such as silica gel or alumina. Even though the desiccant may also adsorb some of the hydrocarbon in the wet-gas feed, water will be more strongly adsorbed by the adsorbent; hence the adsorbed hydrocarbon will be displaced by the moisture entering the desiccant.

As the wet-gas passes through adsorber 8A, C₂ and higher hydrocarbons are adsorbed, and methane and hydrogen pass through the beds as non-adsorbed gas and exit plant 8 through valves 76 and 110 and line 112. The non-adsorbed gas stream is then sent to refinery fuel, or is otherwise disposed of. When the adsorbed component reaches the desired endpoint in the adsorption vessel the adsorption step is terminated and the adsorbent is regenerated to recover the adsorbed gas fraction. On changeover from the adsorption to the regeneration phase of the adsorption cycle, valves 74, 78, 88 and 114 are opened, valves 72 and 76 are closed, and valve 90 remains closed. Adsorber 8A now undergoes regeneration, as described above. The desorbed gas leaves adsorption plant 8 through valves 88 and 114, and is returned to first stage compressor feed line 60 via line 116. Upon completion of regeneration of adsorber 8A, the second adsorption cycle is begun with adsorber 8A initially in adsorption service and adsorber 8B initially undergoing regeneration. The adsorption cycle is basically the same as the cycle described above for removal of nitrogen from the exhaust gas.

The procedure of the first embodiment enables compressors 12 and 16 to handle additional amounts of hydrocarbon, since the volume of the wet gas has been significantly reduced by removal of considerable amounts of methane and hydrogen from this stream. The increased molecular weight of the stream also facilitates compression. This procedure may also be used to reduce the pressure in the system upstream of adsorption plant 8, if the adsorption system is designed to remove wet gas from line 68 quickly enough to cause a pressure reduction in this line.

In the second embodiment of the invention, valves 22, 104, 110 and 114 are open, valves 80 and 106 are closed, and the position of the valves associated with adsorption plant 8 depends on which adsorber is in adsorption service. This embodiment is similar to the first embodiment, except that the system has the additional advantage that the reduced pressure in line 60 which results from the passage of part of the wet-gas through adsorption system 8 is reflected all the way back to catalyst regenerator 4. In this embodiment, flow through lines 60 and 108 is adjusted to the desired rates by regulation of the openings in valves 22 and 104.

In the third embodiment, valves 22 and 106 are open, valve 104 is closed and the position of the valves associated with adsorption plant 8 depends on which adsorber is in adsorption service. In this case, all of the wet gas in line 58 passes through first stage compressor 12, and intermediate pressure gas from line 66 passes through valve 106 and line 108 and into adsorption system 8, and desorbed gas is returned to first stage compressor 12 via feed line 60. The advantage of this embodiment is that the gas stream in line 66 is substantially free of water; accordingly it is not necessary to include a desiccant bed in adsorption plant 8. This gas stream is also substantially free of C₅ and higher hydrocarbons. This embodiment also increases the throughput of compressor 12 by reducing the pressure on the discharge side of this compressor, and results in a reduction of pressure in the upstream units because valve 22 is open. Depending on the extent valve 106 is opened, the load to be handled by compressor 16 is reduced. The molecular weight for the gas handled by both compressors is increased by this option because the lightest components are rejected from the system through line 68.

In a fourth embodiment of the invention, valves 22, 104 and 106 are open and the position of the valves associated with adsorption plant 8 depends on which adsorber is in adsorption service. In this case part of the wet-gas in line 58 passes through adsorption system 8 by virtue of open valve 104. Additionally, part of the intermediate pressure gas stream in line 66 passes through adsorption plant 8 through open valve 106. This embodiment has the advantage that the feed pressure to both compressors 12 and 16 is reduced since some methane and hydrogen are removed from the wet-gas before it reaches compressor 12, and the remainder is removed from intermediate pressure gas line 66. This embodiment also enjoys the advantage that since the pressure in line 60 is reduced and valve 22 is open, the pressure throughout the system upstream of compressor 12, including the pressure in regenerator 4, will be reduced.

It can be appreciated that variations of the above-described procedures are contemplated. For example, the entire system may be undergoing start-up after a plant turnaround. In this case, regenerator 4 may contain fresh catalyst or equilibrium catalyst, i.e. catalyst from an earlier run, which may be regenerated or coked catalyst. A mixture of fuel and air is combusted in regenerator 4 to initiate combustion of the coke (when the catalyst is coked) and/or to heat the catalyst to its normal operating temperature; and to begin producing carbon dioxide. The fuel which can be in fluid form, i.e. a liquid or a gas, but is preferably fuel oil, is introduced into regenerator 4 through line 25, and air is provided through lines 38. The air-fuel mixture is burned in reactor 4. As the fuel burns, the temperature of the catalyst in reactor 4 rises, and an exhaust gas usually comprising mostly carbon dioxide and nitrogen is produced. The exhaust gas is recycled to adsorption plant 8 for removal of nitrogen, and a carbon dioxide-enriched desorbate is recovered and sent to regenerator for use in replacement of air with an oxygen-carbon dioxide combination, as described above.

When the cracking catalyst being heated in regenerator 4 reaches the temperature at which it is ready for use in the hydrocarbon cracking process to be performed in reactor 2, the hydrocarbon cracking process can be started in reactor 2. Start-up of the overall system is initiated by opening a slide valve (not shown) in line 30, which permits the hot catalyst to move downwardly through line 30 and into line 24. As the catalyst enters line 24 it is fluidized and carried upwardly into reactor 2 by the steam entering line 24 from line 28. Simultaneously with the introduction of catalyst into reactor 2, or after the catalyst flow is stabilised, hydrocarbon feed is introduced into line 24 through line 26. After flow of wet gas is establish in line 58, the second stage of the process of the invention, i.e. removal of methane and hydrogen from the wet-gas can be carried out in the manner described above.

It will be appreciated that it is within the scope of the present invention to utilise conventional equipment to monitor and automatically regulate the flow of gases within the system so that it can be fully automated to run continuously in an efficient manner.

The invention is further illustrated by the following simulated example in which, unless otherwise indicated, parts, percentages and ratios are on a volume basis. The example illustrates the process of the invention as it applies to the catalytic cracking of a gas oil.

### EXAMPLE

In this example, an FCC unit is started up using an adsorption system to remove nitrogen from the exhaust gas stream of the catalyst regenerator. The remaining gas stream, substantially composed of carbon dioxide, is recycled to the regenerator. As the concentration of carbon dioxide in the regenerator builds up, air flow to the regenerator is reduced and oxygen flow is increased. When the air is completely replaced, the adsorption system is then used to remove light gas from the wet gas stream from the main fractionator overhead accumulator.

Summarised in Table I are the results of the simulation for the first step of the example, i.e. replacement of air with oxygen and carbon dioxide. In the first step, the process is started using air. The pressure-swing adsorption system of the invention is operated until the recycle gas is substantially composed of carbon-dioxide. The adsorbent is silica gel, the adsorption temperature is 75°C, the adsorption pressure is 12 psig and the desorption pressure is 400 millibar. The adsorption and bed regeneration steps of the cycle are each 2 minutes.

In the Table, "MSCFM" stands for a thousand standard cubic feed per minute, and "MBBL/D" stands for a thousand barrels/day. (1 barrel = 42 US gallons; 1 US gallon = 3.785 litres.)

**TABLE I**

| | |
|---|---|
| Total Regeneration Gas Rate, MSCFM | 225 |
| Total Oxygen Rate, MSCFM | 63.6 |
| Oxygen Leval, v% | 28.3 |
| Flue Gas Oxygen, v% | 2.0 |
| Reactor Temp, °C | 527 |
| Regenerator Bed Temp, °C | 711 |
| FCC Feed Rate, MBBL/D | 135 |
| Coke Yield, w% | 5.2 |

In the second part of this operation of the adsorption plant for removal of light components of the wet gas is illustrated. The run is simulated for operation in the practice of the first embodiment described above, i.e. where the entire wet gas stream is processed in a PSA system upstream of being compressed in the wet gas compressors. The flow rates of the streams of interest are listed in Table II, using a basis a feed stream of 100 MMSCF/D, the composition of which is likewise set forth in Table II. All flow rates are expressed in MMSCF/D (million standard cubic feed per day).

The separation in this part of the example consists of two stages. The C₅ and heavier hydrocarbons are removed in a first stage adsorption plant by pressure swing adsorption using a bed containing de-aluminated zeolite Y catalyst. The non-adsorbed pressure product from the first stage plant is then sent to a second stage adsorption plant that contains silica-gel. The pressure during the adsorption step of the first and second stages is set at 17.5 and 16 psig, respectively, and during the vacuum regeneration step of each of the first and second stages is set at 400 millibar. The sorbate from the second stage is sent to the first-stage of a wet-gas compression plant, after its pressure and temperature have been appropriately adjusted.

**TABLE II**

| **Component** | **Gas to Separator** | **Gas to Compressor** | **Reject Gas** |
|---|---|---|---|
| Hydrogen | 17.0 | 2.5 | 14.5 |
| Methane | 21.0 | 3.2 | 17.8 |
| Carbon Monoxide | 0.5 | 0.1 | 0.4 |
| Carbone Dioxide | 1.5 | 1.3 | 0.2 |
| Nitrogen | 5.0 | 0.8 | 4.2 |
| Hydrogen Sulphide | 0.4 | 0.35 | 0.05 |
| Ethylene | 7.0 | 6.0 | 1.0 |
| Ethane | 6.0 | 5.2 | 0.8 |
| Propylene | 12.0 | 11.0 | 1.0 |
| Propane | 3.5 | 3.2 | 0.3 |
| Butylenes | 11.0 | 10.0 | 1.0 |
| Normal Butane | 2.0 | 1.8 | 0.2 |
| Isobutane | 5.0 | 4.5 | 0.5 |
| C₅+ | 8.1 | 1.2 | 6.9 |
| **TOTAL** | 100 | 51.15 | 48.85 |
| **AVG. MOLECULAR WT.** | 32.3 | 40.8 | 23.4 |

As can be seen from the table, the amount of gas to be compressed is significantly reduced, from 100 to about 51 MMSCF/D. An advantage of the invention, as illustrated in Table II, is the higher molecular weight of the product gas for compression. If a higher recovery level of the C₂ and heavier hydrocarbons is desired, the non-adsorbed gas is subjected to further adsorptive separation stages.

Although the invention has been described with particular reference to specific embodiments, these are merely exemplary of the invention, and variations are contemplated. For example, it may be desirable alternately to operate adsorption plant 8 in carbon dioxide enrichment and wet-gas enrichment service. It may also be desirable to provide wet gas and carbon dioxide-rich gas storage pending their use or processing in the plant during various phases of the process of the invention.

## Claims

1. A process for producing and recovering cracked hydrocarbons from a hydrocarbon feedstock comprising:
(a) cracking said hydrocarbon feedstock in the hydrocarbon cracking zone of a fluid catalytic cracking system comprising a hydrocarbon cracking zone and a catalyst regeneration zone in the presence of hot regenerated hydrocarbon cracking catalyst, and removing a cracked hydrocarbon product stream and coke-coated catalyst from said cracking zone;
(b) transporting coke-coated catalyst from said cracking zone to said catalyst regeneration zone, regenerating catalyst therein by burning coke from the catalyst in the presence of an oxygen-inert gas mixture, and returning regenerated catalyst to said hydrocarbon cracking zone;
(c) distilling said cracked hydrocarbon product in a cracked hydrocarbon product separation zone, thereby producing an overhead gas stream and one or more liquid streams;
(d) cooling said overhead gas stream, thereby separating said gas stream into a liquid stream containing C₅ and heavier hydrocarbons and a wet gas stream comprising C₄ and lighter hydrocarbons and hydrogen;
(e) subjecting at least part of said wet gas stream to separation by pressure swing adsorption process in an adsorption zone containing an adsorbent which preferentially adsorbs C₂ and higher hydrocarbons from said wet gas, thereby producing a non-adsorbed gas fraction comprising methane and hydrogen and an adsorbed gas fraction comprising hydrocarbons higher than methane and an adsorbed fraction comprised of C₂ and higher hydrocarbons;
(f) desorbing said adsorbed gas fraction from said adsorption zone;
(g) compressing the desorbed gas fraction in at least one wet gas compressor; and
(h) transporting compressed desorbed gas fraction to downstream hydrocarbon processing units.

2. A process as claimed in Claim 1, wherein substantially all of said wet gas stream is subjected to said pressure swing adsorption process upstream of step (g).

3. A process as claimed in claim 1, wherein part of said wet gas stream is subjected to said pressure swing adsorption process, and part is combined with said desorbed gas fraction upstream of step (g) .

4. A process as claimed in claim 1, wherein the compression of step (g) is carried out in two stages.

5. A process as claimed in claim 4, wherein at least part of the wet gas sent to step (e) is taken from a point intermediate the first and second compression stages, and the desorbed gas fraction is combined with the wet gas intermediate steps (d) and (e).

6. A process as claimed in claim 5, wherein the said part of the wet gas is taken from downstream of removal of liquid C₅ hydrocarbon intermediate the first and second compression stages.

7. A process as claimed in claim 1, wherein part of said wet gas stream is compressed in a wet gas compressor and additional liquid C₅ hydrocarbon-containing component is removed therefrom, and part of the compressed and further C₅ hydrocarbon-depleted stream is combined with wet gas stream that was not subjected to wet gas compression and further liquid C₅ hydrocarbon removal, and the combined stream is subjected to steps (e) to (h).

8. A process as claimed in any one of claims 1 to 7, wherein upstream of step (e) C₅ and heavier components are removed from the wet gas stream by a preliminary pressure swing adsorption step.

9. A process as claimed in any one of the preceding claims, wherein as a preliminary step prior to the start of the process, hydrocarbon cracking catalyst regeneration is initiated by
(1) combusting fuel with air in the catalyst regeneration zone containing the hydrocarbon cracking catalyst, thereby heating said catalyst and producing exhaust gas comprising carbon dioxide and nitrogen;
(2) subjecting said exhaust gas to pressure swing adsorption in an adsorption zone containing a bed of adsorbent which more strongly adsorbs carbon dioxide than nitrogen and which more strongly adsorbs C₂ and higher hydrocarbons than methane and hydrogen, thereby producing carbon dioxide-enriched gas;
(3) at least partially replacing said air with oxygen and said carbon dioxide-enriched gas; and
(4) when air replacement to the desired extent is attained, stopping the flow of exhaust gas to said adsorption zone and recycling exhaust gas directly to said regenerator zone;

10. A process according to claim 9, in which throughout the initiation of cracking catalyst regeneration, no separation of wet gas by pressure swing adsorption is performed, and apparatus that is subsequently employed to separate the wet gas by pressure swing adsorption is used to separate the exhaust gas.

## Patentansprüche

1. Verfahren zum Erzeugen und Wiedergewinnen gecrackter Kohlenwasserstoffe aus einem Kohlenwasserstoff-Speisematerial, das umfaßt:
a) Cracken des Kohlenwasserstoff-Speisematerials in der Kohlenwasserstoff-Crackzone eines Flüssigkatalysator-Cracksystems mit einer Kohlenwasserstoff-Crackzone und einer Katalysator-Regenerationszone in Anwesenheit von heißem regeneriertem Kohlenwasserstoff-Crackkatalysator, und Abführen eines gecrackten Kohlenwasserstoff-Produktstroms und von koksbeschichtetem Katalysator aus der Crackzone,
b) Transportieren des koksbeschichteten Katalysators aus der Crackzone in die Katalysatorregenerationszone, Regenerieren des Katalysators dort durch Verbrennen des Kokses des Katalysator in Anwesenheit eines Sauerstoff-Inertgas-Gemischs, und Rückführen des regenerierten Katalysators in die Kohlenwasserstoff-Crackzone,
c) Destillieren des gecrackten Kohlenwasserstoffprodukts in einer Produkttrennzone für gecrackten Kohlenwasserstoff, wodurch ein Deckgasstrom und ein oder mehrere Flüssigkeitsströme erzeugt werden,
d) Abkühlen des Deckgasstroms, wodurch dieser Gasstrom in einen C₅ und schwerere Kohlenwasserstoffe enthaltenden Flüssigkeitsstrom und einen C₄ und leichtere Kohlenwasserstoffe und Wasserstoff enthaltenden Naßgasstrom aufgetrennt wird,
e) Unterziehen mindestens eines Teils des Naßgasstroms einer Trennung durch ein Druckwechsel-Adsorptionsverfahren in einer Adsorptionszone, die ein bevorzugt C₂ und höhere Kohlenwasserstoffe aus dem Naßgas adsorbierendes Adsorptionsmittel enthält, wodurch eine nichtadsorbierte Gasfraktion, die Methan und Wasserstoff enthält, und eine adsorbierte Gasfraktion, die höhere Kohlenwasserstoffe als Methan enthält, und eine adsorbierte Fraktion erzeugt werden, die aus C₂ und höheren Kohlenwasserstoffen besteht,
f) Desorbieren der adsorbierten Gasfraktion aus der Adsorptionszone,
g) Verdichten der desorbierten Gasfraktion in mindestens einem Naßgaskompressor, und
h) Transportieren der verdichteten desorbierten Gasfraktion zu stromabwärtigen Kohlenwasserstoff-Verarbeitungseinheiten.

2. Verfahren nach Anspruch 1, wobei im wesentlichen der gesamte Naßgasstrom stromauf des Schritts g) dem Druckwechsel-Adsorptionsprozeß unterzogen wird.

3. Verfahren nach Anspruch 1, wobei ein Teil des Naßgasstroms dem Druckwechsel-Adsorptionsprozeß unterzogen wird und ein Teil stromauf des Schritts g) mit der desorbierten Gasfraktion kombiniert wird.

4. Verfahren nach Anspruch 1, wobei die Verdichtung nach Schritt g) in zwei Stufen ausgeführt wird.

5. Verfahren nach Anspruch 4, wobei mindestens ein Teil des zum Schritt e) gelangenden Naßgases von einer Stelle zwischen der ersten und der zweiten Verdichtungsstufe entnommen wird und die desorbierte Gasfraktion mit dem Naßgas zwischen den Schritten b) und e) kombiniert wird.

6. Verfahren nach Anspruch 5, wobei der genannte Teil des Naßgases von stromabwärts der Abführung des flüssigen C₅-Kohlenwasserstoffs zwischen der ersten und der zweiten Verdichtungsstufe entnommen wird.

7. Verfahren nach Anspruch 1, wobei ein Teil des Naßgasstroms in einem Naßgaskompressor verdichtet wird und davon eine zusätzliche, flüssigen C₅-Kohlenwasserstoff enthaltende Komponente abgeführt wird, und ein Teil des verdichteten und an C₅-Kohlenwasserstoff weiter verarmten Stroms mit dem Naßgasstrom kombiniert wird, der nicht der Naßgasverdichtung und dem Abziehen weiteren flüssigen C₅-Kohlenwasserstoffs unterzogen wurde, und der kombinierte Strom den Schritten e) bis h) unterzogen wird.

8. Verfahren nach einem der Ansprüche 1 bis 7, wobei stromauf des Schritts e) C₅ und schwerere Komponenten aus dem Naßgasstrom durch einen vorhergehenden Druckwechsel-Adsorptionsschritt entfernt werden.

9. Verfahren nach einem der vorhergehenden Ansprüche, wobei als Vorgängerschritt vor dem Beginn des Prozesses die Kohlenwasserstoff-Crackkatalysatorregeneration eingeleitet wird durch
(1) Verbrennen von Brennstoff mit Luft in der Katalysator-Regenerationszone, die dem Kohlenwasserstoff-Crackkatalysator enthält, wodurch der Katalysator erhitzt und ein Kohlendioxid und Stickstoff enthaltendes Abgas erzeugt wird,
(2) Unterziehen des Abgases einer Druckwechseladsorption in einer Adsorptionszone, die ein Adsorptionsmittelbett enthält, das Kohlendioxyd stärker als Stickstoff adsorbiert und das C₂ und höhere Kohlenwasserstoffe stärker adsorbiert als Methan und Wasserstoff, wodurch ein Kohlendioxid-angereichertes Gas erzeugt wird,
(3) mindestens teilweises Ersetzen der Luft durch Sauerstoff und das Kohlendioxid-angereicherte Gas, und
(4) wenn der Luftaustausch in dem gewünschten Maße erreicht worden ist, Stoppen der Abgasströmung in die Adsorptionszone und Rezirkulieren des Abgases direkt in die Regenerationszone.

10. Verfahren nach Anspruch 9, wobei während der Einleitung der Crackkatalysatorregeneration keine Trennung von Naßgas durch Druckwechseladsorption durchgeführt wird, und eine nachfolgend zur Trennung des Naßgases durch Druckwechseladsorption eingesetzte Einrichtung zum Trennen des Abgases verwendet wird.

## Revendications

1. Procédé de production et de récupération d'hydrocarbures craqués à partir d'une charge d'hydrocarbures, comprenant :
(a) le craquage de ladite charge d'hydrocarbures dans la zone de craquage des hydrocarbures d'un système de craquage catalytique en lit fluidisé comprenant une zone de craquage des hydrocarbures et une zone de régénération du catalyseur, en présence du catalyseur de craquage des hydrocarbures régénéré chaud, et le retrait d'un flux de produits hydrocarbonés craqués et du catalyseur recouvert de coke hors de ladite zone de craquage ;
(b) le transport du catalyseur recouvert de coke de ladite zone de craquage à ladite zone de régénération du catalyseur, la régénération du catalyseur dans celle-ci par combustion du coke porté par le catalyseur en présence d'un mélange oxygène/gaz inerte, et le renvoi du catalyseur régénéré dans ladite zone de craquage des hydrocarbures ;
(c) la distillation desdits produits hydrocarbonés craqués dans une zone de séparation des produits hydrocarbonés craqués, produisant ainsi un flux de gaz de tête et un ou plusieurs flux liquides;
(d) le refroidissement dudit flux de gaz de tête, séparant ainsi ledit flux de gaz en un flux liquide contenant des hydrocarbures en C₅ et plus lourds et un flux de gaz humide contenant des hydrocarbures en C₄ et plus légers et de l'hydrogène ;
(e) la soumission d'au moins une partie dudit flux de gaz humide à séparation par procédé d'adsorption par variation de la pression dans une zone d'adsorption contenant un adsorbant qui adsorbe préférentiellement dudit gaz humide les hydrocarbures en C₂ et supérieurs, produisant ainsi une fraction gazeuse non adsorbée comprenant du méthane et de l'hydrogène et une fraction gazeuse adsorbée comprenant des hydrocarbures supérieurs au méthane et une fraction adsorbée composée d'hydrocarbures en C₂ et supérieurs ;
(f) la désorption de ladite fraction gazeuse adsorbée de ladite zone d'adsorption ;
(g) la compression de la fraction gazeuse désorbée dans au moins un compresseur de gaz humide ; et
(h) le transport de la fraction gazeuse désorbée et comprimée jusqu'à des unités de traitement des hydrocarbures situées en aval.

2. Procédé selon la Revendication 1, dans lequel substantiellement tout ledit flux de gaz humide est soumis audit procédé d'adsorption par variation de pression en amont de l'étape (g).

3. Procédé selon la Revendication 1, dans lequel une partie du flux de gaz humide est soumise audit procédé d'adsorption par variation de pression et une partie est combinée à ladite fraction gazeuse désorbée en amont de l'étape (g).

4. Procédé selon la Revendication 1, dans lequel la compression de l'étape (g) est effectuée en deux étages.

5. Procédé selon la Revendication 4, dans lequel au moins une partie du gaz humide envoyé à l'étape (e) est prélevée d'un point intermédiaire entre le premier et le deuxième étage de compression, et la fraction gazeuse désorbée est combinée au gaz humide entre les étapes (d) et (e).

6. Procédé selon la Revendication 5, dans lequel ladite partie du gaz humide est prélevée depuis en aval du retrait de l'hydrocarbure en C₅ liquide, entre le premier et le second étage de compression.

7. Procédé selon la Revendication 1, dans lequel une partie dudit flux de gaz humide est comprimée dans un compresseur de gaz humide et le composant contenant l'hydrocarbure en C₅ liquide supplémentaire en est retiré, et une partie du flux comprimé et davantage appauvri en hydrocarbure en C₅ est combinée au flux de gaz humide qui n'a pas été soumis à la compression du gaz humide et au retrait supplémentaire d'hydrocarbure en C₅ liquide, et le flux combiné est soumis aux étapes (e) à (h).

8. Procédé selon l'une quelconque des Revendications 1 à 7, dans lequel, en amont de l'étape (e), les composants en C₅ et plus lourds sont retirés du flux de gaz humide par une étape préliminaire d'adsorption par variation de pression.

9. Procédé selon l'une quelconque des Revendications précédentes, dans lequel. en guise d'étape préliminaire au démarrage du procédé, la régénération du catalyseur de craquage des hydrocarbures est initiée par
(1) la combustion de combustible avec de l'air dans la zone de régénération du catalyseur contenant le catalyseur de craquage des hydrocarbures, réchauffant ainsi ledit catalyseur et produisant du gaz d'échappement contenant du dioxyde de carbone et de l'azote ;
(2) la soumission dudit gaz d'échappement à une adsorption par variation de pression dans une zone d'adsorption contenant un lit d'adsorbant qui adsorbe plus fortement le dioxyde de carbone que l'azote et qui adsorbe plus fortement les hydrocarbures en C₂ et supérieurs que le méthane et l'hydrogène, produisant ainsi un gaz enrichi en dioxyde de carbone ;
(3) le remplacement, au moins partiel, dudit air par de l'oxygène et par ledit gaz enrichi en dioxyde de carbone ; et
(4) lorsque le remplacement de l'air jusqu'au niveau désiré est atteint, l'arrêt du flux de gaz d'échappement vers ladite zone d'adsorption et le recyclage du gaz d'échappement directement vers ladite zone de régénération.

10. Procédé selon la Revendication 9, dans lequel, tout au long du lancement de la régénération du catalyseur de craquage, aucune séparation de gaz humide par adsorption par variation de pression n'est effectuée et le dispositif qui est ensuite utilisé pour séparer le gaz humide par adsorption par variation de pression est utilisé pour séparer le gaz d'échappement.
